# EUROPÄISCHE PATENTANMELDUNG

(11) **EP 2 604 473 A1**
(43) Veröffentlichungstag der Anmeldung: **19.06.2013**
(21) Anmeldenummer: 12194587.7
(22) Anmeldetag: 28.11.2012
(51) Int. Cl.: B60R 7/04, E06B 9/15, B29C 45/14, B29C 45/16

(54) **Herstellung eines gewölbten Kunststoff-Rollos für ein Ablagefach**

(30) Priorität: 13.12.2011 DE 102011088375
(71) Anmelder: Lisa Dräxlmaier GmbH, 84137 Vilsbiburg (DE)
(72) Erfinder: Zöhrens, Britta, 84137 Vilsbiburg (DE); Polland, Andreas, 84030 Ergolding (DE); Hendrata, Yustinus Teguh, 84137 Vilsbiburg (DE)
(74) Vertreter: HOFFMANN EITLE

(57) **Zusammenfassung**

Rollo und Verfahren zur Herstellung eines Rollos zum Öffnen und Verschließen der Öffnung einer Ablage, eines Aufbewahrungsfachs, einer Bedienkonsolen oder dergleichen, insbesondere zur Verwendung in Kraftfahrzeugen, wobei mehrere Stege (10, 20) aus einer Hartkomponente und eine Weichkomponente (30) hergestellt werden, mithilfe derer die Stege (10, 20) auf einer Verbindungsseite (31) der Weichkomponente (30) miteinander verbunden werden, wobei die Weichkomponente (30) mit zumindest einer entlang der Erstreckungsrichtung der Stege (10, 20) ebenen Unterseite, die der Verbindungsseite (31) gegenüberliegt, hergestellt wird.

## Beschreibung

### TECHNISCHES GEBIET

Die vorliegende Erfindung betrifft ein Rollo und ein Verfahren zur Herstellung eines Rollos zum Öffnen und Verschließen der Öffnung einer Ablage, eines Aufbewahrungsfaches, einer Bedienkonsole oder dergleichen, insbesondere zur Verwendung in Kraftfahrzeugen.

### STAND DER TECHNIK

In Kraftfahrzeugen, insbesondere der gehobenen Mittelklasse oder Oberklasse, werden hohe Anforderungen an die Optik des Innenraums und dabei insbesondere an die Verblendung von Bedienelementen, Aufbewahrungsfächern und dergleichen, vor allem im Bereich der Mittelkonsole gestellt. Dabei kommen in bestimmten Bereichen von Kraftfahrzeugen Rollos zum Einsatz, die ein verschiebbares Öffnen und Verschließen der abzudeckenden Bereiche von Hand oder automatisch erlauben.

Derartige Rollos können aus Stegen aufgebaut sein, hergestellt im Spritzguss, die mittels einer Weichkomponente miteinander verbunden sind. Die Stege greifen über Führungszapfen in Laufschienen ein, entlang derer das Öffnen und Verschließen des Rollos erfolgt. Dabei wird der Verschiebeweg meist so gestaltet, dass das Rollo beim Öffnen aus einer im Wesentlichen horizontalen Ausrichtung umgelenkt wird. Die Weichkomponente, welche die steifen Stege miteinander verbindet, ermöglicht das Umlenken oder Aufwickeln des Rollos.

Die EP 1 717 105 B1 beschreibt ein Rollo, das auf seiner Oberseite, d.h. der Sichtseite oder Vorderseite, eine als Polsterung ausgebildete Weichkomponente aufweist, die auf aneinander gereihten Trägerelementen angeordnet ist. Andere Rollos mit auf der Vorderseite vorgesehener Polsterung als Weichkomponente sind aus der EP 1 690 740 A1 und DE 10 2005 023 062 B3 bekannt.

Bei herkömmlichen Rollos, die mit einer mehrere Stege überspannenden und diese verbindenden Weichkomponente ausgestattet sind, besteht das Problem, das eine Wölbung des Rollos, insbesondere entlang der Erstreckungsrichtung der Stege, nicht oder nur schwer realisierbar ist.

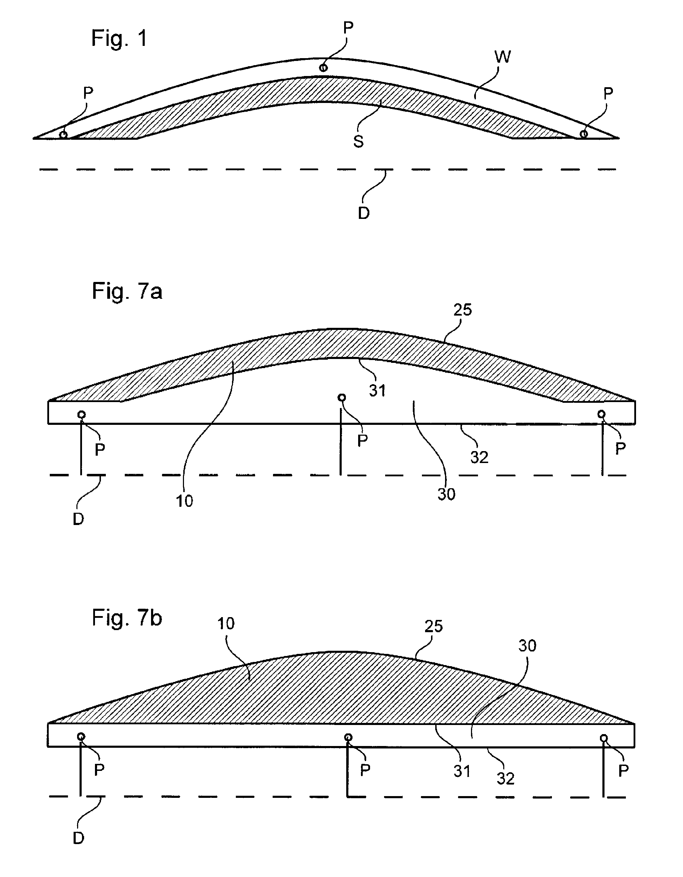

Zur Verdeutlichung sei auf Fig. 1 verwiesen, in der ein gewölbter Steg S und eine darauf angebrachte Weichkomponente W gezeigt sind. D bezeichnet eine Drehachse, um die das Rollo beim Öffnen und Schließen gewickelt werden soll. P bezeichnet Punkte der sogenannten "neutralen Faser" der Weichkomponente W, also diejenigen Punkte, die bei der Umlenkung der Weichkomponente W um die Drehachse D weder gestaucht noch gedehnt werden.

Bei einem in Querrichtung (Erstreckungsrichtung der Stege) gewölbten Rollo, weisen die Punkte der neutralen Faser P unterschiedliche Abständen zur Drehachse D auf. Allerdings hängt die Weglänge, die von einer neutralen Faser P bei Drehung um die Drehachse D zurückzulegen ist, vom Abstand zur Drehachse D ab. Je größer der Abstand, desto länger der zurückzulegende Weg. Durch unterschiedliche Abstände der Punkte der neutralen Faser P zur Drehachse D wird ein Abrollen des Rollos dann erheblich erschwert oder gar unmöglich gemacht, wenn die Weichkomponente W als geschlossene Lage mehrere oder alle Stege miteinander verbindet. Eine solche einstückige Beschaffenheit der Weichkomponente kann allerdings nicht nur aus Kostengründen sondern auch im Hinblick auf die Stabilität, Haltbarkeit und Funktionalität des Rollos wünschenswert sein. Ferner ist es wünschenswert, die Oberflächenkontur des Rollos auf der Sichtseite frei gestalten zu können. Insbesondere sollen Wölbungen des Rollos entlang der Quer- und/oder Längsrichtung, d.h. entlang der Erstreckungsrichtung der Stege und/oder entlang der Bewegungsrichtung des Rollos, ohne funktionelle Einschränkungen realisierbar sein.

### KURZE BESCHREIBUNG DER ERFINDUNG

Es ist daher eine Aufgabe der Erfindung, ein Rollo und ein Verfahren zu dessen Herstellung, zum Öffnen und Verschließen der Öffnung einer Ablage, eines Aufbewahrungsfachs, einer Bedienkonsolen oder dergleichen, insbesondere zur Verwendung in Kraftfahrzeugen, bereitzustellen, die eine flexiblere Konturierung der Rollooberfläche ohne funktionelle Einschränkungen ermöglichen.

Die Aufgabe wird mit einem Verfahren gemäß Anspruch 1 und einem Rollo gemäß Anspruch 7 gelöst. Vorteilhafte Ausführungsformen folgen aus den jeweiligen Unteransprüchen.

Erfindungsgemäß werden zur Fertigung des Rollos mehrere Stege aus einer Hartkomponente und eine Weichkomponente hergestellt. Die Materialauswahl für die Stege ist nicht im Besonderen beschränkt, bevorzugt wird jedoch ein ausreichend stabiler Kunststoff verwendet. Die Weichkomponente ist aus einem Material gefertigt, das weicher ist als die Hartkomponente. Vorzugsweise ist die Weichkomponente aus einem elastischen Kunststoff oder Schaumstoff hergestellt. Mithilfe der Weichkomponente werden die Stege miteinander verbunden, und zwar vorzugsweise so, dass die Stege nebeneinander und entlang ihrer Erstreckungsrichtung parallel ausgerichtet sind. Die Verbindung zwischen der Weichkomponente und den Stegen kann durch direktes Anspritzen eines die Weichkomponente bildenden Kunststoffs erzielt werden, wie es später genauer beschrieben wird, und/oder es kann ein Klebstoff zwischen der Weichkomponente und den Stegen vorgesehen sein. Die Stege sind vorzugsweise länglich ausgebildet und weisen eine Erstreckungsrichtung auf, die im eingebauten Zustand des Rollos quer zur Öffnungs-/Schließrichtung ist. Die Stege sind vorzugsweise an den Seiten mit ersten Führungsmitteln, beispielsweise Führungszapfen, ausgestattet, die im eingebauten Zustand des Rollos mit zweiten Führungsmitteln, etwa Führungsschienen, in welche die Führungszapfen eingreifen, so zusammenwirken, dass ein Verschieben des Rollos zum Öffnen und Schließen der Öffnung möglich ist. Die Seite der Weichkomponente, auf der die Stege vorgesehen sind, wird hier als Verbindungsseite bezeichnet. Ferner weist das Rollo eine Vorderseite auf, welche die Sichtseite ist, also die Seite, die dem Fahrgast bei geschlossenem Rollo zugewandt ist. Auf dieser Seite befinden sich die Stege. Die Weichkomponente unterscheidet sich von einer zweidimensionalen, dünnen Lage, beispielsweise einer dünnen Textilschicht darin, dass sie eine nicht zu vernachlässigende Dicke und vorzugsweise eine dreidimensionale Kontur mit Vertiefungen und Vorsprüngen aufweist. Jedoch ist die Rückseite bzw. Unterseite der Weichkomponente erfindungsgemäß entlang der Erstreckungsrichtung der Stege eben, d.h. nicht gekrümmt. Vorzugsweise überspannt die Weichkomponente die gesamte Länge der Stege, in ihrer Erstreckungsrichtung, wodurch die Stabilität bzw. Gesamtintegration verbessert wird.

Wenn von der Oberfläche des Rollos die Rede ist, ist die dreidimensionale Kontur auf der Sichtseite des Rollos im die Öffnung verschließenden Zustand gemeint. Es sei darauf hingewiesen, dass die Zuordnung Sichtseite vs. Rückseite des Rollos auch im nicht eingebauten Zustand eindeutig definiert ist, unter anderem deshalb, weil die Sichtseite des Rollos als Dekoroberfläche dient und sich bereits optisch von der Rückseite unterscheidet. Außerdem ist an der Beschaffenheit des Rollos feststellbar, in welcher Richtung das Abrollen des Rollos stattfindet. Somit sind die Rückseite des Rollos, auf der sich die Weichkomponente befindet, und die Rückseite der Weichkomponente, die erfindungsgemäß entlang der Erstreckungsrichtung der Stege eben ist, eindeutig definiert.

Durch die ebene Ausgestaltung der Weichkomponente auf der Rückseite entlang der Erstreckungsrichtung der Stege ist gewährleistet, dass die Punkte der neutralen Faser der Weichkomponente stets einen zumindest ungefähr gleichen Abstand zur Drehachse einer das Rollo umlenkenden Rolle haben. Dadurch wird die Umlenkung ermöglicht oder zumindest vereinfacht, und zwar sowohl unabhängig von der Kontur der Vorderseite der einzelnen Stege als auch der Oberflächenkontur des Rollos insgesamt. Die Oberfläche des Rollos kann sowohl in Öffnungs-/Schließrichtung als auch quer dazu, d.h. in Erstreckungsrichtung der Stege gewölbt sein. Die Wölbung oder Krümmung muss nicht gleichförmig sein, d.h. der Krümmungsradius muss nicht konstant sein. Neben einer Wölbung sind auch komplexe Strukturen oder Konturen als Oberflächengestaltung denkbar, beispielsweise in Form von Logos, Schriftzügen oder Mustern.

Vorzugsweise ist die Rückseite jedes Stegs mit einer oder mehreren Vertiefungen vorgesehen, die beispielsweise in Form von Aussparungen, Hohlräumen oder Zwischenräumen einer Rippenstruktur ausgebildet sein können. Vorzugsweise werden die Stege nach ihrer Herstellung auf ihrer Rückseite mit der Weichkomponente miteinander verbunden, indem die Vertiefungen der Stege mit entsprechenden Vorsprüngen der Weichkomponente in Eingriff gebracht werden. Mit anderen Worten weist bei dieser Ausführungsform die Weichkomponente eine bevorzugt passgenaue Entsprechung der rückseitigen Kontur der Stege auf, sodass Vorsprünge der Weichkomponente mit den entsprechenden Vertiefungen der Stege in Eingriff gebracht werden können. Indem die Weichkomponente mit den Vertiefungen der Stege im Eingriff steht, werden die Stege nicht nur miteinander verbunden, sondern die Stege erfahren relativ zueinander eine von den Vorsprüngen der Weichkomponente vorgegebene Ausrichtung. Dadurch wird ein stabilerer und wenn gewünscht engerer Zusammenhalt der Stege erzielt, was sich auch durch eine verbesserte und vor allem dauerhafte Oberflächenbeschaffenheit des Rollos bemerkbar macht.

Vorzugsweise werden die Stege vor dem Verbinden mit der Weichkomponente derart in ein Werkzeug eingelegt, dass die Stege fest aneinander gedrückt werden. Indem die Stege in dem Werkzeug fest aneinander gedrückt werden und indem in diesem Zustand die Verbindung mit der Weichkomponente erfolgt, wird die Verbindung der Stege im Hinblick auf eine gewünschte und dauerhaft beizubehaltende Kontur der Rollooberfläche verbessert.

Vorzugsweise wird die Weichkomponente nach dem Einlegen der Stege in das Werkzeug unter die Stege gespritzt, sodass die Stege miteinander verbunden werden. Durch das Einspritzen und Unterspritzen mit der Weichkomponente erfolgt nicht nur eine ausgezeichnete Verbindung zwischen den Stegen und der Weichkomponente, sondern die Weichkomponente wird auch im Zustand der gewünschten Oberflächenkontur des Rollos angespritzt, sodass eine gewissermaßen integrale Struktur der gewünschten Geometrie aus Stegen und Weichkomponente entsteht.

Wie oben kurz angesprochen, werden die Stege vorzugsweise aus einem Kunststoff gespritzt. Die Stege können dabei beispielsweise in beliebig vielen Spritzgussformnestern produziert werden. Allerdings ist es auch möglich, insbesondere im Hinblick auf ein nicht unidirektional gewölbtes Rollo, dass die Stege in einem Spritzgusszyklus gefertigt werden, um durch ein einfaches Zusammenschieben der Stege die gewünschte gewölbte Oberfläche zu erzeugen.

Vorzugsweise werden die Stege und die Weichkomponente als Mehrkomponentenspritzguss in einem Spritzgussprozess gefertigt. Dies kann beispielsweise in einem einzigen Werkzeug durchgeführt werden, wodurch die Herstellung effizient und kostengünstig durchgeführt wird.

Die Stege müssen nicht gleich geformt sein, sondern können je nach der zu erzeugenden Kontur der Rollooberfläche unterschiedliche Geometrien aufweisen. Insbesondere können die Querschnitte der Stege senkrecht zu ihrer Erstreckungsrichtung variieren. In der Praxis würde man die gewünschte Oberflächenkontur des Rollos vorab im CAD konstruieren und anschließend virtuell derart "auseinander schneiden", dass die einzelnen Segmente bzw. Stege in einem oder mehreren Spritzgusszyklen gefertigt werden können.

Vorzugsweise werden die Stege auf der Vorderseite mit einer Dekorschicht versehen, um die Wertigkeit des Rollos zu erhöhen oder das Dekor der Rollooberfläche geeignet festzulegen.

Die Erfindung kommt beispielsweise zum Verschließen von Ablagefächern in Kraftfahrzeuginnenräumen zum Einsatz. Weitere mögliche Einsatzgebiete sind Mittelkonsolen, Instrumententafeln, Türverkleidungen und Fontseitenverkleidungen in Fahrzeugen, sowie Innenraumverkleidungen in Flugzeugen.

### KURZE BESCHREIBUNG DER ZEICHNUNGEN

Fig. 1 zeigt den schematischen Querschnitt eines hypothetischen Rollos, zur Erläuterung der Nachteile aus dem Stand der Technik.
Fig. 2 ist eine perspektivische, schematische Ansicht auf die Vorderseite eines Rollos, bei dem die Weichkomponente weggelassen wurde.
Fig. 3 zeigt das Rollo der Fig. 1 von schräg unten.
Fig. 4 zeigt die Struktur einer Weichkomponente für die Anordnung der Fig. 2 und 3.
Fig. 5 zeigt die Weichkomponente der Fig. 4 von unten.
Fig. 6a ist eine schematische Ansicht auf die Rückseite eines Stegs.
Fig. 6b ist eine schematische Ansicht des Querschnitts zweier Stege senkrecht zu ihrer Erstreckungsrichtung.
Fig. 7a und 7b zeigen schematische Querschnitte durch ein Rollo zweier besonderer Ausführungsformen.

### WEGE ZUR AUSFÜHRUNG DER ERFINDUNG

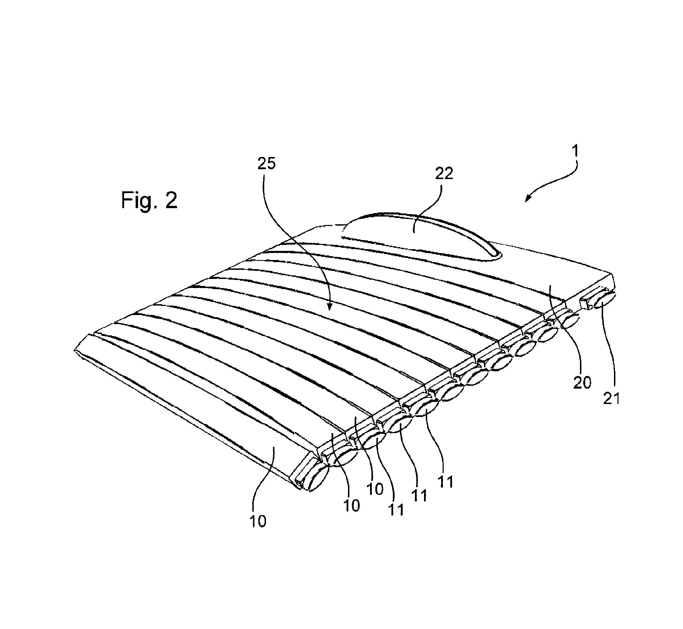

Fig. 2 ist eine perspektivische, schematische Ansicht eines Rollos von schräg oben, bei dem die Weichkomponente weggelassen wurde. Die Anordnung 1 weist eine Mehrzahl von Stegen 10 und ein Bedienelement 20 auf, das ein besonders ausgebildeter Steg 10 ist. Die Stege 10 (incl. des Bedienelements 20) liegen aneinander, parallel zueinander und bilden, bis auf den allerersten Steg 10, der in einer bereits umgelenkten Position gezeigt ist, eine im Wesentlichen geschlossene Oberfläche 25, welche die für den Fahrgast sichtbare Oberfläche des Rollos ist, wenn das Rollo im Einbauzustand geschlossen ist.

Jeder Steg 10 weist Führungszapfen 11 auf, die im Einbauzustand mit einer nicht dargestellten Schiene eingreifen, entlang derer die Öffnungs-/Schließbewegung des Rollos erfolgt. Durch die perspektivische Ansicht der Fig. 2 ist jeweils nur ein Führungszapfen 11 pro Steg 10 sichtbar. Tatsächlich weist jeder Steg 10 zwei Führungszapfen 11 auf, die seitlich an den Stegen 10 angebracht sind. Die Führungszapfen können integral mit den Stegen 10 ausgebildet sein oder anderweitig an den Stegen 10 befestigt sein. Analog weist das Bedienelement 20 zwei Führungszapfen 21 auf, von denen nur einer sichtbar ist. Ferner ist auf dem Bedienelement 20 ein Griff 22 für das manuelle Aufschieben und Zuziehen des Rollos vorgesehen. Die sichtseitige Oberfläche des Rollos ist quer zur Öffnungs-/Schließrichtung des Rollos, d.h. entlang der Erstreckungsrichtung der Stege 10, 20 des Rollos gekrümmt. Zusätzlich oder alternativ zu der Querkrümmung kann eine Längskrümmung entlang der Öffnungs-/Schließrichtung des Rollos vorgesehen sein, wenngleich diese in den Figuren nicht gezeigt ist. Es sei daraufhingewiesen, dass verschiedene Oberflächenkonturen mit konstanten und veränderlichen Krümmungsradien bei ausgezeichneter Funktionalität des Rollos realisiert werden können.

Obwohl 11 Stege 10 von identischer Geometrie gezeigt sind, können sich die Stege 10 teilweise oder vollständig hinsichtlich ihrer Geometrie, ihres Materials oder anderer Eigenschaften voneinander unterscheiden.

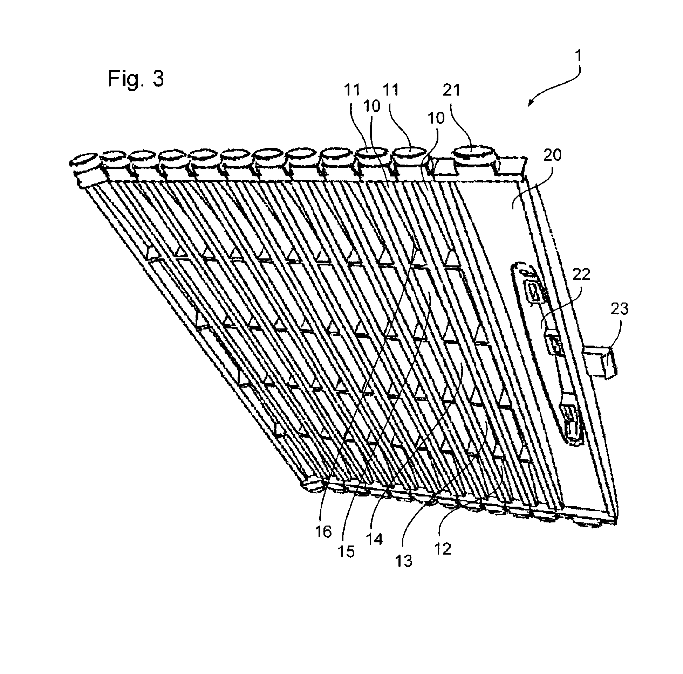

In Fig. 3 ist der Aufbau 1 der Fig. 2 von schräg unten gezeigt. Aus dieser Perspektive sind Aussparungen 12 bis 16 zu erkennen, die in jedem Steg 10, 20 vorhanden sind. Ferner ist eine Rastnase 23 zum Verrasten des Rollos in der geschlossenen Position an dem Bedienelement 20 vorgesehen.

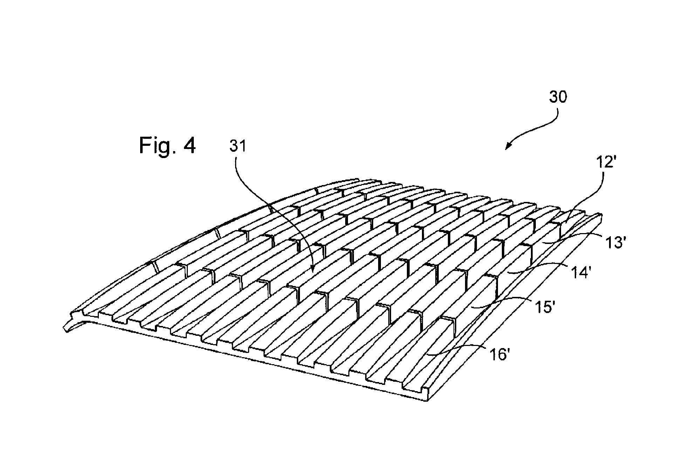

In der Fig. 4 ist eine Weichkomponente 30 gezeigt, mit der die Stege 10, 20 gegeneinander schwenkbar verbunden werden. Die in dieser Perspektive sichtbare Seite der Weichkomponente 30 ist die Verbindungsseite 31, die mit den Stegen 10, 20 in Verbindung gebracht wird. Die bevorzugt aus einem elastischen Kunststoff hergestellte Weichkomponente 30 weist Vorsprünge 12', 13', 14', 15', 16' auf, die gewissermaßen als Positiv mit den Aussparungen 12, 13, 14, 15, 16 der Stege 10, 20 in Eingriff gebracht werden. Die Verbindung zwischen der Weichkomponente 30 und den Stegen 10, 20 kann beispielsweise dadurch erfolgen, dass das Material der Weichkomponente 30 direkt an die Rückseite der Stege 10, 20 angespritzt wird. Alternativ kann die Weichkomponente 30 unabhängig von den Stegen 10, 20 gefertigt werden und mit oder ohne Klebstoff anschließend mit den Stegen 10, 20 verbunden werden.

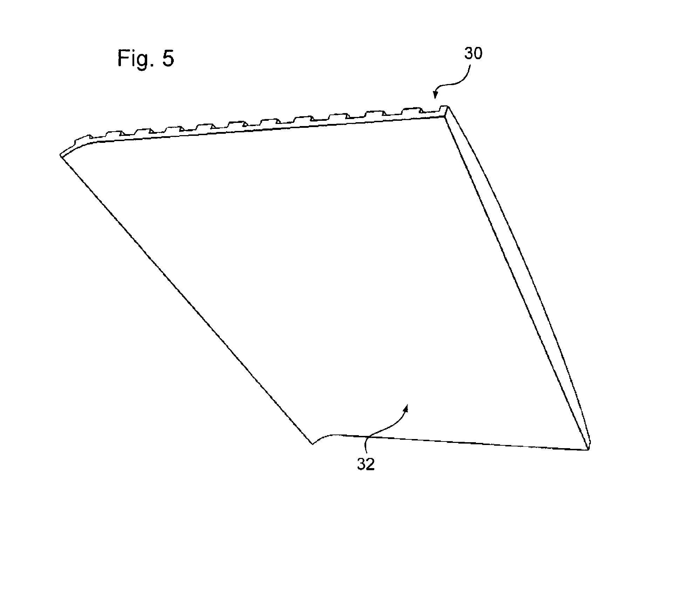

Eine Ansicht der Weichkomponente 30 von schräg unten ist in Fig. 5 gezeigt. Hier ist die Unterseite 32 der Weichkomponente zu erkennen. Entlang der Erstreckungsrichtung der Stege 10, d.h. quer zur Öffnungs-/Schließrichtung des Rollos ist die Unterseite 32 der Weichkomponente 30 eben, d.h. nicht gekrümmt. In der vorliegenden Ausführungsform ist die Unterseite 32 der Weichkomponente 30 sogar in der Öffnungs-/Schließstellung eben, zumindest in der Normalposition, d.h. derjenigen Position in der das Rollo die Öffnung verschließt.

Indem die Weichkomponente 30 mit den Stegen 10, 20 über die Vorsprünge und Aussparungen verbunden wird, erhalten die Stege 10, 20 eine Stabilität und ggf. eine Vorspannung, sodass eine dauerhafte Oberflächenbeschaffenheit des Rollos auch bei komplizierten Oberflächenkonturen realisiert werden kann. Dabei wird bei einer besonders bevorzugten Ausführungsform die Weichkomponente 30 derart unter die Stege 10, 20 gespritzt, dass die sämtlichen Stege 10, 20 und die Weichkomponente 30 eine sehr enge, nahezu integrale Verbindung eingehen. Indem die Stege 10 (mit oder ohne Bedienelement 20) vorher in einem Werkzeug ausgerichtet und gegeneinander gedrückt werden, erfolgt die Herstellung der Weichkomponente 30 direkt an der zu erzielenden Kontur. Auf diese Weise können Fertigungstoleranzen, die im Verlaufe der Zeit zu Spalten zwischen den Stegen 10, 20 auf der Sichtseite führen könnten, minimiert.

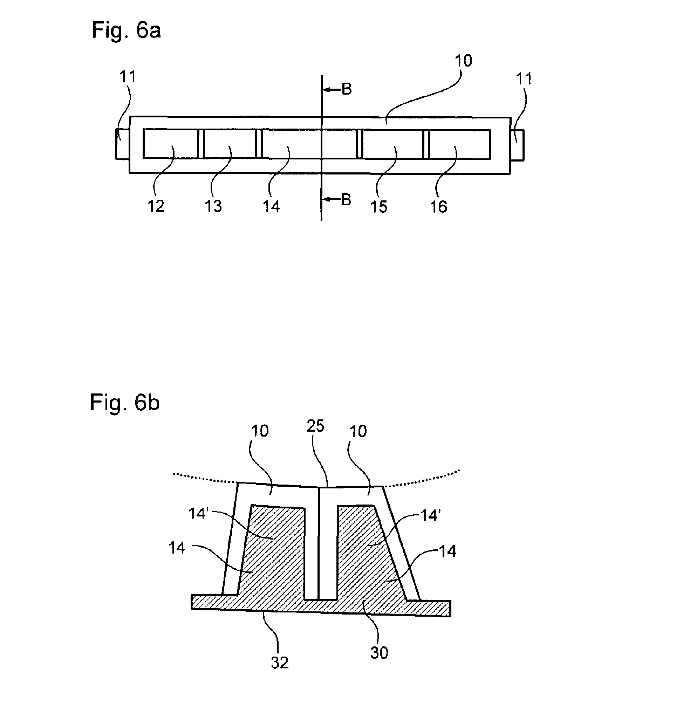

Eine Draufsicht auf einen einzelnen Steg 10 von unten, mit Hohlräumen 12 bis 16 und Führungszapfen 11 ist in Fig. 6a gezeigt. Die Figur 6b zeigt einen Querschnitt B-B senkrecht zur Erstreckung zweier beispielhafter Stege 10, gemäß einer Ausführungsform, in der sich die Querschnitte der Stege 10 unterscheiden. In die Hohlräume, von denen in dieser Ansicht nur die Hohlräume 14 sichtbar sind, ist die Weichkomponente 30 mit den entsprechenden Vorsprüngen 14' eingebracht. Durch die Elastizität der Weichkomponente 30 und durch eine signifikante Einbringtiefe der Vorsprünge 14' wird eine solide und flächige Anlage der beiden Stege 10 aneinander entlang deren Anlageflächen sichergestellt. Dies wiederum gewährleistet eine geschlossene Oberfläche des Rollos von dauerhafter Beschaffenheit. Wie es aus der Fig. 6b ersichtlich ist, kann der Querschnitt der Stege 10 variabel sein, um auf diese Weise die Kontur der Rollooberfläche zu modellieren.

Die Schnittansichten der Fig. 7a und 7b zeigen zwei Ausführungsbeispiele des Rollos aus Stegen 10 und Weichkomponente 30. Durch die ebene untere Fläche der Weichkomponente 30 befinden sich die Punkte der neutralen Faser P im Wesentlichen im gleichen Abstand zur Drehachse D. Während in der Fig. 7a die Oberseite der Weichkomponente 30 der Wölbung der Stege 10 folgt, ist die Weichkomponente 30 in der Fig. 7b nicht nur auf der Unterseite (32) sondern auch auf der Verbindungsseite (31) eben ausgebildet.

## Patentansprüche

1. Verfahren zur Herstellung eines Rollos zum Öffnen und Verschließen der Öffnung einer Ablage, eines Aufbewahrungsfachs, einer Bedienkonsolen oder dergleichen, insbesondere zur Verwendung in Kraftfahrzeugen, wobei
mehrere Stege (10, 20) aus einer Hartkomponente und
eine Weichkomponente (30) hergestellt werden, mithilfe derer die Stege (10, 20) auf einer Verbindungsseite (31) der Weichkomponente (30) miteinander verbunden werden, wobei
die Weichkomponente (30) mit zumindest einer entlang der Erstreckungsrichtung der Stege (10, 20) ebenen Unterseite (32), die der Verbindungsseite (31) gegenüberliegt, hergestellt wird.

2. Verfahren nach Anspruch 1, **dadurch gekennzeichnet, dass** einer oder mehrere der Stege (10, 20) auf der Verbindungsseite mit der Weichkomponente (30) mit mehreren Vertiefungen (12, 13, 14, 15, 16) hergestellt werden und
die Stege (10, 20) mit der Weichkomponente (30) verbunden werden, indem die Vertiefungen (12, 13, 14, 15, 16) der Stege (10, 20) mit entsprechenden Vorsprüngen (12', 13', 14', 15', 16') der Weichkomponente (30) in Eingriff gebracht werden.

3. Verfahren nach Anspruch 1 oder 2, **dadurch gekennzeichnet, dass** die Stege (10, 20) vor dem Verbinden mit der Weichkomponente (30) derart in ein Werkzeug eingelegt werden, dass die Stege (10, 20) fest aneinander liegen.

4. Verfahren nach Anspruch 3, **dadurch gekennzeichnet, dass** die Weichkomponente (30) anschließend derart unter die Stege (10, 20) gespritzt wird, dass sie die Stege (10, 20) im Werkzeug miteinander verbindet.

5. Verfahren nach einem der vorhergehenden Ansprüche, **dadurch gekennzeichnet, dass** die Stege (10, 20) aus einem Kunststoff gespritzt werden.

6. Verfahren nach Anspruch 4 und 5, **dadurch gekennzeichnet, dass** die Stege (10, 20) und die Weichkomponente (30) als Mehrkomponentenspritzguss in einem Spritzgussprozess hergestellt werden.

7. Rollo zum Öffnen und Verschließen der Öffnung einer Ablage, eines Aufbewahrungsfachs, einer Bedienkonsolen oder dergleichen, insbesondere zur Verwendung in Kraftfahrzeugen, wobei das Rollo
mehrere Stege (10, 20) aus einer Hartkomponente und eine Weichkomponente (30) aufweist, mithilfe derer die Stege (10, 20) auf einer Verbindungsseite (31) der Weichkomponente (30) miteinander verbunden sind, wobei
die Weichkomponente (30) mit zumindest einer entlang der Erstreckungsrichtung der Stege (10, 20) ebenen Unterseite (32), die der Verbindungsseite (31) gegenüberliegt, vorgesehen ist.

8. Rollo nach Anspruch 7, **dadurch gekennzeichnet, dass** einer oder mehrere der Stege (10, 20) auf der Verbindungsseite mit der Weichkomponente (30) mit einer oder mehreren Vertiefungen (12, 13, 14, 15, 16) vorgesehen sind und
die Stege (10, 20) mit der Weichkomponente (30) verbunden sind, indem die Vertiefungen (12, 13, 14, 15, 16) der Stege (10, 20) mit entsprechenden Vorsprüngen (12', 13', 14', 15', 16') der Weichkomponente (30) in Eingriff stehen.

9. Rollo nach Anspruch 7 oder 8, **dadurch gekennzeichnet, dass** die Weichkomponente (30) an die Stege (10, 20) angespritzt ist.

10. Rollo nach einem der Ansprüche 7 bis 9, **dadurch gekennzeichnet, dass** die Stege (10, 20) aus einem Kunststoff gespritzt sind.

11. Rollo nach einem der Ansprüche 7 bis 10, **dadurch gekennzeichnet, dass** die Sichtseite des Rollos im geschlossenen Zustand in Quer und/oder Längsrichtung gewölbt ist.

12. Rollo nach einem der Ansprüche 7 bis 11, **dadurch gekennzeichnet, dass** das Rollo aus Stegen (10, 20) unterschiedlicher Geometrie aufgebaut ist.

13. Rollo nach einem der Ansprüche 7 bis 12, **dadurch gekennzeichnet, dass** die Stege (10, 20) auf der der Verbindungsseite (31) abgewandten Seite mit einer Dekorschicht versehen sind.

14. Rollo nach einem der Ansprüche 7 bis 13, **dadurch gekennzeichnet, dass** die Weichkomponente (30) im Wesentlichen die gesamte Länge der Stege (10, 20) in der Erstreckungsrichtung der Stege überspannt.

15. Rollo nach einem der vorhergehenden Ansprüche, **dadurch gekennzeichnet, dass** die Unterseite der Weichkomponente (30) im die Öffnung verschließenden Zustand des Rollos sowohl in Erstreckungsrichtung der Stege (10, 20) als auch in Öffnungs-/Schließrichtung des Rollos eben ist.
